# EUROPEAN PATENT SPECIFICATION

(11) **EP 2 848 473 B1**
(45) Date of publication and mention of the grant of the patent: **02.03.2016**
(21) Application number: 13184568.7
(22) Date of filing: 16.09.2013
(51) Int. Cl.: B60R 9/06, B60R 9/10

(54) **Load carrier for mounting on the rear of a vehicle**
Lastenträger zur Montage am Heck eines Fahrzeugs
Porte-charge pour le montage sur l'arrière d'un véhicule

(43) Date of publication of application: 18.03.2015
(73) Proprietor: Carman Enterprise Co., Ltd., Yuhang District Hangzhou Zhejiang 311121 (CN); Twins Full Limited, Wanchai, Hong Kong (CN)
(72) Inventor: Li, Xianwei, Hangzhou, China (CN); Wang, Junqiang, Hangzhou, China (CN)
(74) Representative: Albrecht, Ralf

(56) References cited:
- US-A- 5 567 107
- US-A1- 2008 099 522
- US-A1- 2011 057 008

## Description

The invention relates to a load carrier for mounting on the rear of a vehicle and having a coupling device at the front for fastening the load carrier at the vehicle, a base part connected with the coupling device and a carrier frame for fastening a load the carrier frame being connected with the base part, wherein the coupling device and the base part are connected by a pivoting bearing allowing swivelling movement from an untilted position to a tilted position of the base part as well as of the carrier frame about a horizontal pivoting axis extending perpendicularly to a driving direction away from the vehicle, if the load carrier is mounted on the vehicle, wherein the pivoting bearing comprises at least one blocking mechanism having a blocking element respectively, which is displaceable between a blocking position, wherein the pivoting bearing is blocked in the untilted position, and a release position, allowing tilting of the carrier frame, and wherein the blocking element is actuatable by an actuating mechanism disposed on the base part or the carrier frame, the actuating mechanism having an actuating element which is movable between a non-actuated position and an actuated position, the actuating element and the blocking element are disposed and formed so that the actuating element can act upon the blocking element for unblocking the pivoting bearing when the carrier frame is in transporting position.

A load carrier for mounting on a rear of a vehicle, particularly of a motor vehicle like a car is frequently used for transporting bicycles, carts etc. Generally, such a load carrier comprises a coupling device at the front end, which is usually embodied so that the load carrier can be mounted onto a standard end ball of a tow hook. A load carrier for transporting bicycles comprises a carrier frame extending substantially in a horizontal plane, onto which one or more bicycles can be placed in an upright position transverse to the driving direction of the vehicle, to which the load carrier is mounted. The carrier frame has usual fastening means for fastening the bicycles to the carrier frame safely.

In order to prevent the load carrier from making contact with the ground, particularly the road, on which the vehicle is driven, the lowest parts of the load carrier, particularly the carrier frame, have to be disposed relatively high on the vehicle. This entails the disadvantage that it is not easy to place bicycles on the carrier frame. This is particularly the case, if the bicycles are provided with an electric motor as a support for driving the bicycles, this motor being powered by rechargeable accumulators. Such bicycles are usually about 10 kg heavier than conventional bicycles.

In order to facilitate loading and unloading a load carrier with a bicycle, load carriers have been developed comprising a base part connected with the coupling device and a carrier frame connected with the base part being movable relative to the base part between an upper transporting position and a lower loading position by means of a displacing device acting between the base part and the carrier frame. Such load carriers are known from EP 2 159 106 A1, EP 2 082 922 A1, NL 1 023 396 A, US 5,567,107 A, US 4,456,421 and US 5,456,564 A. The carrier frames of the load carriers described in these documents can be lowered to a loading position, wherein the carrier frame contacts the ground or road onto which the vehicle is standing. This allows to move the bicycle on the carrier frame without lifting it. Having placed the bicycle or bicycles on the carrier frame of the load carrier, the carrier frame can be lifted to the transporting position by means of the displacing device, and afterwards the vehicle can be driven without danger of contact between the load carrier and the road.

In order to minimize the change of the center for gravity of the vehicle by mounting the load carrier and also to reduce the danger that the load carrier comes into contact with the road, it is preferred to make the distance between the rear end of the vehicle and the front end of the load carrier as small as possible. This entails the disadvantage that the trunk lid of the luggage trunk of the vehicle or, if the vehicle is a caravan, its rear door cannot be opened as long as the load carrier is mounted on the vehicle. So, the luggage trunk can only be loaded or unloaded if the load carrier is disconnected from the tow hook. This is very time consuming, particularly if the load carrier is loaded with bicycles.

In order to avoid this disadvantage, it is known for conventional load carriers, wherein the carrier frame is not movable between an upper transporting position and a lower loading position, to provide a tilting device between the coupling device and the carrier frame allowing swivelling of the carrier frame movement from an untilted position, wherein the carrier frame is in its transporting position, to a tilted position about a horizontal pivoting axis extending perpendicular to the driving direction of the vehicle. Examples of such constructions are disclosed in US 2008/0099522 A1, US 2011/0057008 A1, US 6,485,243 B1, EP 1 059 2005 A1, EP 1 700 745 A1, WO 2006/110078 A1, EP 1 972 499 B1 and EP 1 393 979 A1. The rear door of a caravan or the trunk lid of a car can be opened allowing access to the luggage trunk, if the carrier frame is tilted to its tilted position so that it is no more necessary to dismount the load carrier from the tow hook of the vehicle for loading and unloading the luggage trunk. However, loading and unloading of the carrier with bicycles is difficult.

If is an object of the present invention to provide a load carrier of the above mentioned type which facilitates its loading and unloading.

According to the invention the object is achieved by a load carrier having a base part connected with the coupling device and a carrier frame, wherein the load carrier is characterized in that the carrier frame is moveable relative to the base part between an upper transporting position and a lower loading position by means of a displacing device acting between the base part and that carrier frame. Providing such a displacing device in combination with a tilting device as characterized above facilitates handling of the load carrier, particularly loading and unloading the luggage trunk on the one hand and loading and unloading of the load carrier itself on the other hand.

In a preferred embodiment, the carrier frame extends in its untilted position at least substantially in a horizontal plain so that the bicycles can be positioned onto the carrier frame one after another on the same height. The carrier frame should be inclined in the tilted position at least about 25° with respect to the horizontal plane, but the pivoting angle should not be substantially bigger than it is necessary for opening and closing the rear door or trunk lid of the vehicle. The pivoting angle should be limited by a suitable stopper in order to avoid contact with the road.

The present invention is not restricted to a displacing device allowing to lower the carrier frame so far that it contacts the ground or road when it is mounted on the vehicle. However, the invention is especially suited for such load carriers as disclosed in EP 2 159 106 A1, EP 2 082 922 A1, NL 1 023 396 A, US 5,567,107 A, US 4,456,421 and US 5,456,564 A.

In a further embodiment of the invention, the actuating element is disposed on the carrier frame and the blocking element is disposed on the base part so that the actuating element of the actuating mechanism is opposite to the blocking element of the blocking mechanism only in the transporting position of the carrier frame. This design makes it possible to act upon the actuating mechanism when holding the carrier frame by hand of a user so that tilting of the carrier frame can be controlled by hand until the tilted position is reached.

A further embodiment of the invention is characterized in that the blocking element is embodied as a swivelling lever having a blocking pin received in a recess thereby blocking the blocking mechanism and that the swivelling lever is movable by actuating the actuating element so that the blocking pin is moved out of the recess thereby releasing the pivoting bearing for tilting the carrier frame into the tilted position. This construction is very simple and nevertheless easy and reliable to operate. Particularly, the recess is formed in a part of the coupling device and the swivelling lever is pivotable disposed on the base frame.

There is no need for a special design of the actuating element. However, the actuating element is preferable embodied as a pushing element which pushes the blocking element from the blocking position in the release position when actuated. Moreover, the pushing element is formed as a pushing rod, which is particularly slidingly movable between its non-actuated and its actuated positions. More preferable, the pushing rod is slidingly movable in the driving direction. This allows a simple construction for actuating the pushing rod from the rear end of the load carrier.

In a further embodiment of the invention, the actuating element is connected with a paddle which acts upon the actuating element. This paddle can be disposed of one of the sides of the carrier frame, but preferable the paddle should project over the rear end of the load carrier so that operating of the blocking mechanism is possible from the rear end of the load carrier giving the person acting upon the actuating mechanism the opportunity to hold the carrier frame during operation and to let the carrier frame tilt under control of the person handling the load carrier.

The realization of the present invention does not depend on the type of the coupling device, whereby the load carrier is mounted on the vehicle. In most cases, the coupling device should be embodied for mounting onto an end ball of a tow hook.

Moreover, the principles of the present invention do not depend on the construction of the displacing device for moving the carrier frame between its transporting position and its loading position. However, a preferred embodiment of the displacing device comprises a screw spindle device, preferably disposed at least substantially vertically at the front of the carrier frame. This screw spindle device can comprise an outer telescopic pipe and an inner telescopic pipe slidingly movable guided within the outer telescopic pipe and a screw spindle extending coaxially through both of the pipes and connecting both of the pipes so that rotating the screw spindle causes telescopic movement of the pipes relative to each other. It is appropriate that the inner telescopic pipe is mounted to the carrier frame and that the outer telescopic pipe is mounted to the base part. It is possible to provide means for hand operating the screw spindle, but it is preferred that the screw spindle is driven by an electric motor, which is particularly mounted on top of the screw spindle device. This avoids troublesome and time-consuming lifting of the carrier frame.

The invention will be elucidated herein below on the basis of an exemplary embodiment and with reference to the drawings. In the drawings
- Figure 1: is a side-view of a bicycle carrier according to the invention with the base frame in the transporting position;
- Figure 2: is a side-view of the basic carrier according to figure 1 with the base frame in transporting position, but the actuating mechanism actuated;
- Figure 3: is a side-view of the bicycle carrier according to figure 1 and 2 with the base frame tilted into the tilted position and
- Figure 4: is a side-view of the bicycle carrier according to figures 1 to 3 with the carrier frame untilted, but lowered to its loading position.

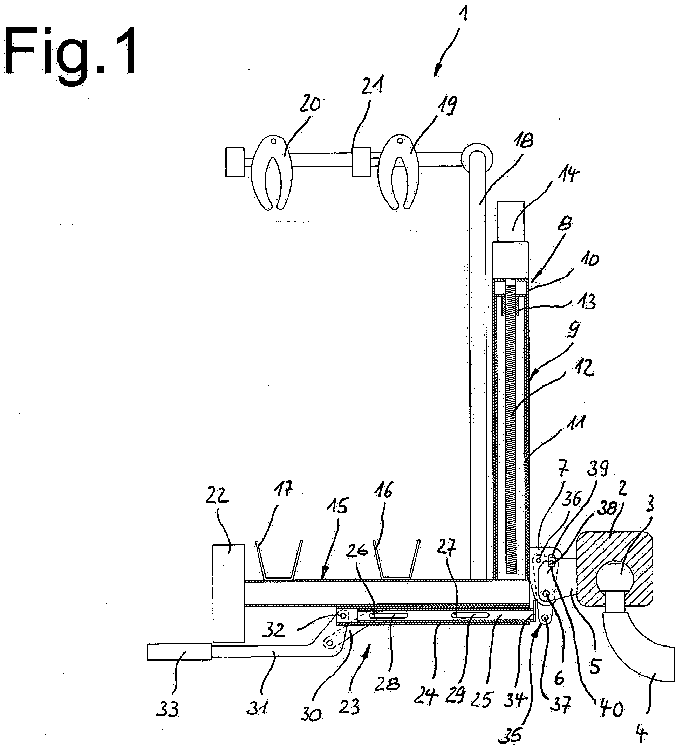

Figure 1 to 4 show a bicycle carrier 1 in side-views having a conventional coupling device 2, whereby the bicycle carrier 1 is fixed onto an end ball 3 of a tow hook 4. Details of the coupling device 2 are not displayed in detail. The coupling device 2 allows to dismount the bicycle carrier 1 from the end ball 3 in a usual manner.

A bracket 5 is rigidly connected with the rear side of the body of the coupling device 2 and extends in a vertical plain. A pivoting bearing 6 is provided at the lower end of the bracket 5 connecting the bracket 5 with a base part 7, which is also embodied as a bracket extending in a vertical plane. The bearing 6 allows the base part 7 to swivel about an axis extending horizontally and perpendicularly to the drawing plane and hence, to the driving direction of the not shown vehicle, which the tow hook 4 belongs to. It is possible that a further identical embodied pair consisting of a bracket and a base part can be provided behind the bracket 5 and the base part 7 in order to give the construction a better stability.

The base part 7 is rigidly connected with a displacing device 8 comprising a screw spindle device 9. The screw spindle device 8 has an outer telescopic pipe 10 which the base part 7 is fixed to. An inner telescopic pipe 11 is slidingly moveable guided within the outer telescopic pipe 10. A screw spindle 12 extends through both of the inner and outer telescopic pipes 10, 11 coaxially. The screw spindle 12 is in engagement with a screw nut 13 being part of the inner telescopic pipe 11 and disposed at the top thereof. The upper end of the screw spindle 12 is connected with an electric motor 14, which is mounted on top of the outer telescopic pipe 10. The electric motor 14 is able to rotate the screw spindle 12 in both rotating directions causing the inner telescopic pipe 11 to move vertically relative to the outer telescopic pipe 10 upwardly and downwardly.

The lower end of the inner telescopic pipe 11 is connected with a carrier frame 15, which is formed as a rectangle extending in a horizontal plane. On the topside of the carrier frame 15, two rails 16, 17 in form of channels opened upwardly are fixed which extend transversely to the driving direction. Each of the rails 16, 17 is able to receive the two wheels of a bicycle standing in an upright position. The distance between the two rails 16, 17 is dimensioned so that two bicycles can be placed onto the carrier frame 15 side by side with its driving direction transversely to the driving direction of the vehicle.

A fixing frame 18 is rigidly connected with the topside of the carrier frame 15 and extends in a vertical plane transversely to the driving direction. Usual fixing clamps 19, 20 are mounted on a telescopic fixing arm 21 connected with the fixing frame 18. By means of these fixing clamps 19, 20, two bicycles can be fixed to the fixing frame 18 by clamping beams of the bicycle frames. The rear end of the carrier frame 15 is formed by a sign-board 22 for receiving a number plate and the backlights.

On the underside of the carrier frame 15, an actuating mechanism 23 is provided. The actuating mechanism 23 comprises a guiding pipe 24 fixed to the underside of the carrier frame 15 and extending horizontally and in the driving directing. A pushing rod 25 is telescopicly guided within the guiding pipe 24. The pushing rod 25 has two guiding pins 26, 27 which are guided in slits 28, 29 formed in the guiding pipe 24 and extending in its axial direction. The rear end of the pushing rod 25 is pivotable connected with an actuating bar 30 which is pivotable connected to a paddle lever 31, which is pivotable connected with the rear end of the guiding pipe 24 by a bearing 32. The free end of the paddle lever 31 is provided with a paddle 33 which projects over the rear end of the bicycle carrier 1 allowing to operate the paddle lever 31 by pressing a foot on the paddle 33 from above. The front end of the pushing rod 25 is closed by a pushing plate 34.

A swivelling lever 35 is pivotably connected with the base part 7 via a bearing 36 at the upper end of the swivelling lever 35. The swivelling lever 35 can pivot about a bearing axis extending perpendicular to the drawing plane and hence, to the driving direction, i.e. parallel to the axis of the pivoting bearing 6. The lower end of the swivelling lever 35 is provided with a release pin 37 which cooperates with the pushing plate 34 of the pushing rod 25 as described below. The swivelling lever 35 has a blocking pin 38 at the upper end in a horizontal distance to the bearing 36. The blocking pin 38 penetrates a slit 39 formed in the base part 7 and corresponds to a recess 40 formed into the upper part of the bracket 5 and being open upwardly.

The bicycle carrier 1 functions as described in the following.

As shown in figure 1 the carrier frame 15 has been lifted by the displacing device 8 in the transporting position, which is high enough so that no danger exists that the bicycle carrier 1 comes into contact with the road when the vehicle is driven. The base part 7 and the carrier frame 15 are hold in an untilted position, because the blocking pin 38 is received in the recess 40 causing a rigid connection between the coupling device 2 and the base part 7 via the swivelling lever 35, i.e. via the engagement of the blocking pin 38 in the recess 40.

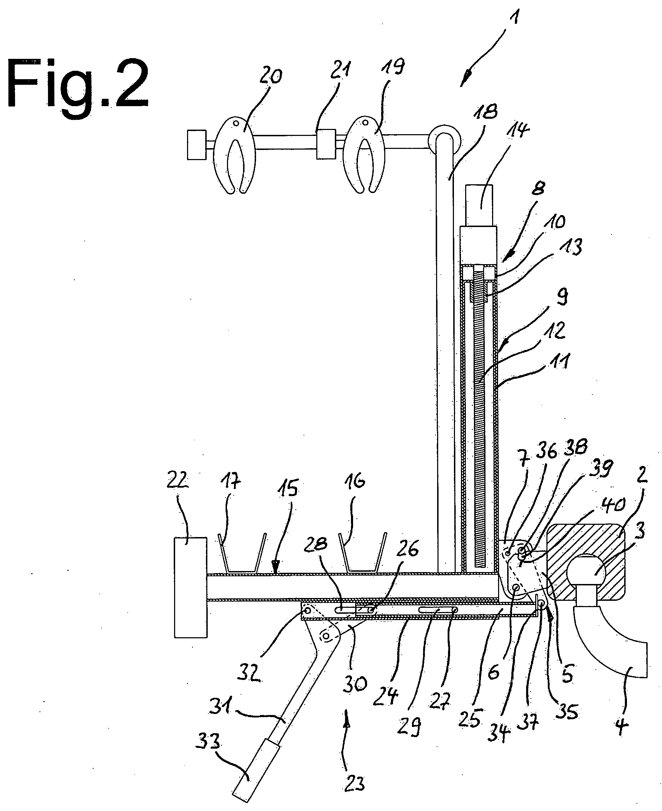

If a person wants to open the trunk lid of the luggage trunk of the vehicle, the person presses the paddle 33 downwardly whereby the paddle lever 31 swivels about the axis of bearing 32 anti-clockwise. This situation is shown in figure 2.

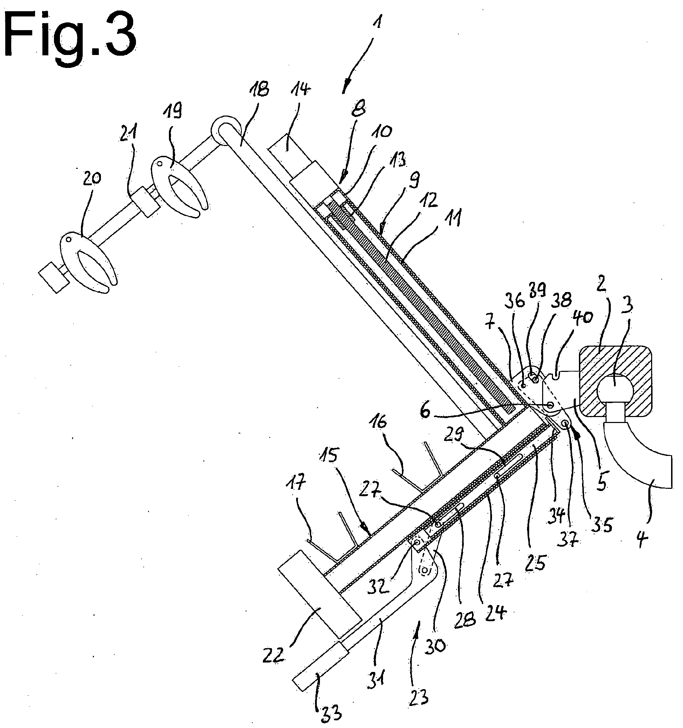

Rotating the paddle lever 31 causes a sliding movement of the pushing rod 25 via the actuating bar 30. Thereby, the pushing plate 34 at the front end of the pushing rod 25 comes into contact with the release pin 37 of the swivelling lever 35. Further pushing of the pushing rod 25 causes a swivelling movement of the swivelling lever 35 anti-clockwise about the axis of bearing 36. This movement results in moving the blocking pin 38 upwardly thereby leaving the recess 40. Then, the blocking effect is lifted, and the unit consisting of base part 7, displacing device 8 and carrier frame 15 together with the actuating mechanism 23 is free to be tilted from the untilted position as shown in figures 1 and 2 to the tilted position as shown in figure 3. The tilting movement about the pivoting bearing 6 can be controlled by the operating person by handling the fixing frame 18 in order to reduce the speed of the tilting movement. The tilted position as shown in figure 3 is defined by a stopper not visible.

The unity consisting of base part 7 and carrier frame 15 can be returned from the tilted position as shown in figure 3 to the untilted position as shown in figures 1 and 2 by pushing the upper part of the fixing frame 18 in driving direction. This causes turning of the unity clockwise about the axis of pivoting bearing 6. As shown in figure 3, the paddle 33 has returned to its non-actuated position, which can be caused by a spring or other means. In the end phase of the clockwise movement of the unity, the blocking pin 38 runs over the curved edge of bracket 5 causing a swivelling movement of the swivelling lever 35 anti-clockwise, thereby lifting the blocking pin 38 to the upper end of slit 39. When the blocking pin 38 reaches the recess 40, the blocking pin 38 is free to fall into the recess 40 by gravity forces urging the swivelling lever 35 to a clockwise movement about its bearing 36. This movement might be supported by a spring. Then, the blocking pin 38 is received in the recess 40 blocking the unity consisting of base part 7 and carrier frame 15 in the untilted position again as shown in figures 1 and 2.

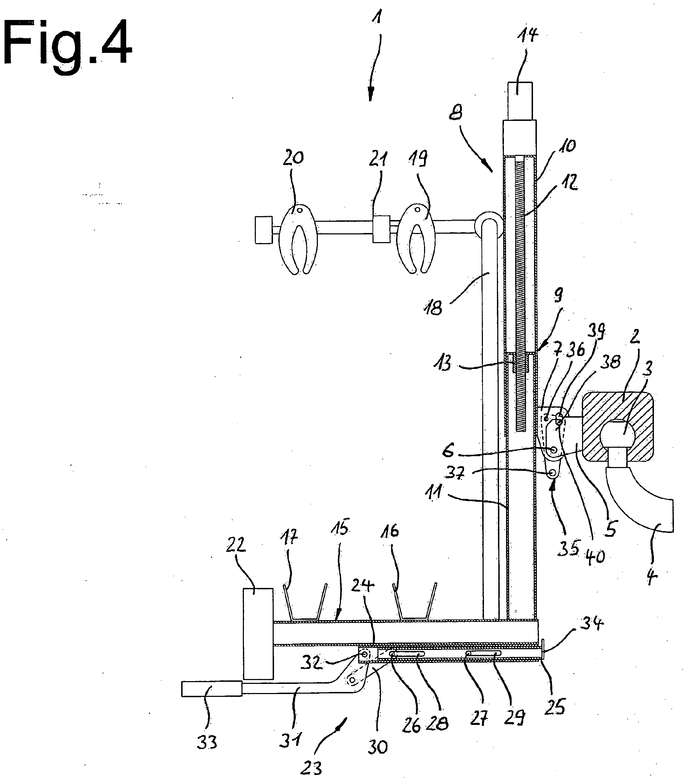

In this position, the carrier frame 15 can be lowered by according rotating of the screw spindle 12 causing a sliding movement of the inner telescopic pipe 11 downwardly and hence also an downward movement of the carrier frame 15, while maintaining the position of the outer telescopic pipe 10 and the base part 7 fixed thereon together with the swivelling lever 35. It is recognizable that the pushing rod 25 is lowered with the carrier frame 15 as well so that the pushing rod 25 can no more act upon the swivelling lever 35. Figure 4 shows the carrier frame 15 being in its loading position allowing bicycles to enter the carrier frame 15 and its rails 16, 17 easily without lifting the bicycles substantially. So, the bicycle carrier 1 is particularly suited for carrying bicycles having an electric motor for assisting the rotation of the bicycle paddles.

## Claims

1. Load carrier (1) for mounting on the rear of a vehicle and having a coupling device (2) at the front for fastening the load carrier (1) at the vehicle, a base part (7) connected with the coupling device (2) and a carrier frame (15) for fastening a load, the carrier frame (15) being connected with the base part (7), wherein the coupling device (2) and the base part (7) are connected by a pivoting bearing (6) allowing swivelling movement from an untilted position to a tilted position of the base part (7) as well as of the carrier frame (15) about a horizontal pivoting axis extending perpendicularly to a driving direction away from the vehicle, if the load carrier is mounted on the vehicle, wherein the pivoting bearing (6) comprises at least one blocking mechanism having a blocking element (35) respectively, which is displaceable between a blocking position, wherein the pivoting bearing (6) is blocked in the untilted position, and a release position, allowing tilting of the carrier frame (15), and wherein the blocking element (35) is actuatable by an actuating mechanism disposed on the base part (7) or the carrier frame (15), the actuating mechanism (23) having an actuating element (25) which is movable between a non-actuated position and an actuated position, the actuating element (25) and the blocking element (35) are disposed and formed so that the actuating element (25) can act upon the blocking element (35) for unblocking the pivoting bearing (6) when the carrier frame (15) is in transporting position, **characterized in that** the carrier frame (15) is movable relative to the base part (7) between an upper transporting position and a lower loading position by means of a displacing device (8) acting between the base part (7) and the carrier frame (15).

2. Load carrier according to claim 1, **characterized in that** the carrier frame (15) extends in the untilted position at least substantially in a horizontal plane and that the carrier frame (15) is inclined in the tilted position at least about 25° with respect to the horizontal plane.

3. Load carrier according to claim 1 or 2, **characterized in that** the loading position is so low that the carrier frame (15) is in contact with a ground or road when the load carrier (1) is mounted on the vehicle standing on that ground or road.

4. Load carrier according to one of the claims 1 through 3, **characterized in that** the actuating element (25) is disposed on the carrier frame (15) and that the blocking element (38) is disposed on the base part (7) so that the actuating element (25) is opposite to the blocking element (35) only in the transporting position of the carrier frame (15).

5. Load carrier according to one of the claims 1 through 4, **characterized in that** the actuating mechanism (23) is actuable from the rear end of the load carrier (1), particularly projects over the rear end of the load carrier (1).

6. Load carrier according to one of the claims 1 through 5, **characterized in that** the blocking element (35) is embodied a swivelling lever (35) having a blocking pin (38) received in a recess (40) thereby blocking the blocking mechanism and that the swivelling lever (35) is movable by actuating the actuating element (25) so that the blocking pin (38) is moved out of the recess (40) thereby releasing the pivoting bearing (6) for tilting the carrier frame (15) into the tilted position, particularly that the recess (40) is formed in a part of the coupling device (2) and that the swivelling lever (35) is pivotable disposed on the base part (7).

7. Load carrier according to one of claims 1 through 6, **characterized in that** the actuating element (25) is embodied as a pushing element which pushes the blocking element (35) from the blocking position into the release position when actuated, particularly that the pushing element is embodied as a pushing rod, particularly slidingly movable between its non-actuated and its actuated positions, preferably in the driving direction.

8. Load carrier according to one of claims 1 through 7, **characterized in that** the actuating element (25) is connected with a paddle (33) which acts upon the actuating element (25), particularly that the paddle (33) projects over the rear end of the load carrier (1).

9. Load carrier according to one of claims 1 through 8, **characterized in that** the coupling device (2) is embodied for mounting onto an end ball (3) of a tow hook (4).

10. Load carrier according to one of claims 1 through 9, **characterized in that** the displacing device (8) comprises a screw spindle device (9) disposed at least substantially vertically at the front of the carrier frame (15).

11. Load carrier according to claim 10, **characterized in that** the screw spindle device (9) comprises an outer telescopic pipe (10) and an inner telescopic pipe (11) slidingly movable guided within the outer telescopic pipe (10) and a screw spindle (12) extending coaxially through both of the pipes (10, 11) and connecting both of the pipes (10, 11) so that rotating the screw spindle (12) causes telescopic movement of the pipes (10, 11) relative to each other particularly in a vertical direction.

12. Load carrier according to claim 11, **characterized in that** the inner telescopic pipe (11) is mounted to the carrier frame (15) and the outer telescopic pipe (10) is mounted to the base part (7).

13. Load carrier according to claim 11 or 12, **characterized in that** the screw spindle (12) is driven by an electric motor (14), which is particularly mounted on top of the screw spindle device (9).

## Patentansprüche

1. Lastenträger (1) zum Anbringen an das Heck eines Fahrzeugs, der an der Vorderseite eine Kupplungsvorrichtung (2) zur Befestigung des Lastenträgers (1) an dem Fahrzeug, ein Basisteil (7), das mit der Kupplung (2) verbunden ist, und einen Trägerrahmen (15) zur Befestigung der Last aufweist, wobei der Trägerrahmen (15) mit dem Basisteil (7) verbunden ist, wobei die Kupplung (2) und das Basisteil (7) durch ein Schwenklager (6) verbunden sind, das eine schwenkende Bewegung des Basisteils (7) sowie des Trägerrahmens (15) aus einer geraden Stellung in eine geneigte Stellung um eine horizontale Drehachse, die sich senkrecht zu einer Fahrtrichtung erstreckt, weg von dem Fahrzeug ermöglicht, wenn der Lastenträger an dem Fahrzeug angebracht ist, wobei das Schwenklager (6) zumindest einen Arretierungsmechanismus umfasst, der ein entsprechendes Arretierungselement hat, das zwischen einer Arretierungsstellung, in welcher das Schwenklager (6) in der ungeschwenkten Stellung arretiert ist, und einer Entriegelungsstellung, die ein Schwenken des Trägerrahmens (15) erlaubt, verstellbar ist, wobei das Arretierungselement (35) mittels eines Betätigungsmechanismus betätigbar ist, der an dem Basisteil (7) oder dem Trägerrahmen (15) angeordnet ist, wobei der Betätigungsmechanismus (23) ein Betätigungselement (25) aufweist, das zwischen einer unbetätigten Stellung und einer betätigten Stellung bewegbar ist, wobei das Betätigungselement (25) und das Arretierungselement (35) so angeordnet und ausgebildet sind, dass ein Eingreifen des Betätigungselement (25) in das Arretierungselement (35) möglich ist, um das Schwenklager (6) freizugeben, wenn sich der Trägerrahmen (15) in der Transportstellung befindet, **dadurch gekennzeichnet, dass** der Trägerrahmen (15) relativ zu dem Basisteil (7) zwischen einer höheren Transportstellung und einer tieferen Beladestellung mittels einer Verstelleinheit (8), die zwischen dem Basisteil (7) und dem Trägerrahmen (15) wirksam, bewegbar ist.

2. Lastenträger nach Anspruch 1, **dadurch gekennzeichnet, dass** der Trägerrahmen (15) sich in der ungeschwenkten Stellung zumindest im Wesentlichen in einer horizontalen Ebene erstreckt und dass der Trägerrahmen (15) in der geneigten Stellung zumindest um 25° in Bezug zu der horizontalen Ebene geneigt ist.

3. Lastenträger nach Anspruch 1 oder 2, **dadurch gekennzeichnet, dass** die Beladestellung so tief ist, dass der Trägerrahmen (15) in Kontakt mit dem Boden oder der Straße ist, wenn der Lastenträger (1) an dem auf dem Boden oder der Straße stehenden Fahrzeug angebracht ist.

4. Lastenträger nach einem der Ansprüche 1 bis 3, **dadurch gekennzeichnet, dass** das Betätigungselement (25) an dem Trägerrahmen (15) angeordnet ist und dass das Arretierungselement (38) an dem Basisteil (7) so angeordnet ist, dass das Betätigungselement (25) nur in der Transportstellung des Trägerrahmens (15) gegenüberliegend zu dem Arretierungselement (35) angeordnet ist.

5. Lastenträger nach einem der Ansprüche 1 bis 4, **dadurch gekennzeichnet, dass** der Betätigungsmechanismus (23) von dem Heckende des Lastenträgers (1) betätigbar ist, insbesondere über das Heckende des Lastenträgers (1) vorsteht.

6. Lastenträger nach einem der vorhergehenden Ansprüche 1 bis 5, **dadurch gekennzeichnet, dass** das Arretierungselement (35) als Schwenkhebel (35) ausgebildet ist, der einen Arretierungsbolzen (38) hat, welcher in einer Vertiefung (40) aufgenommen ist, den Arretierungsmechanismus zu arretieren, und dass der Schwenkhebel (35) durch das Betätigen des Betätigungselements (25) so bewegbar ist, dass der Arretierungsbolzen (38) aus der Vertiefung (40) herausbewegt wird, wodurch das Schwenklager (6) entriegelt wird, um den Trägerrahmen (15) in eine geneigte Stellung zu kippen, wobei insbesondere die Vertiefung (40) in einem Teil der Kupplung (2) ausgebildet ist und der Schwenkhebel (35) drehbar an dem Basisteil (7) angeordnet ist.

7. Lastenträger nach einem der Ansprüche 1 bis 6, **dadurch gekennzeichnet, dass** das Betätigungselement (25) als ein Antriebselement ausgebildet ist, welches bei Betätigung das Arretierungselement (35) aus der Arretierungsstellung in die Entriegelungsstellung drückt, wobei das Antriebselement insbesondere als ein Antriebsstab ausgebildet ist, welcher insbesondere gleitend zwischen seiner unbetätigten und seiner betätigten Stellung, bevorzugt in der Fahrtrichtung, bewegbar ist.

8. Lastenträger nach einem der Ansprüche 1 bis 7, **dadurch gekennzeichnet, dass** das Betätigungselement (25) mit einem Betriebsknüppel (33) verbunden ist, der auf das Betätigungselement (25) einwirkt, wobei der Betriebsknüppel (33) insbesondere über das Heckende des Lastenträgers (1) hervorsteht.

9. Lastenträger nach einem der Ansprüche 1 bis 8, **dadurch gekennzeichnet, dass** die Kupplung (2) ausgebildet ist, um auf dem Kugelkopf (3) eines Zughakens (4) angebracht zu werden.

10. Lastenträger nach einem der Ansprüche 1 bis 9, **dadurch gekennzeichnet, dass** die Verstelleinheit (8) eine Schraubenspindeleinheit (9) umfasst, die zumindest im Wesentlichen vertikal an der Vorderseite des Trägerrahmens (15) angeordnet ist.

11. Lastenträger nach Anspruch 10, **dadurch gekennzeichnet, dass** die Schraubenspindeleinheit (9) ein äußeres Teleskoprohr (10) und ein inneres Teleskoprohr (11), das gleitend bewegbar innerhalb des äußeren Teleskoprohrs (10) geführt ist und eine Schraubenspindel (12) umfasst, die sich koaxial durch beide Rohre (10, 11) erstreckt und beide Rohre (10, 11) so verbindet, dass eine Rotation der Schraubenspindel (12) eine zusammenschiebende Bewegung der Rohre (10, 11) relativ zueinander, insbesondere in einer vertikalen Richtung, verursacht, umfasst.

12. Lastenträger nach Anspruch 11, **dadurch gekennzeichnet, dass** das innere Teleskoprohr (11) an dem Trägerrahmen (15) angebracht ist und dass das äußere Teleskoprohr (10) an dem Basisteil (7) angebracht ist.

13. Lastenträger nach einem der Ansprüche 11 oder 12, **dadurch gekennzeichnet, dass** die Schraubenspindel (12) mittels eines elektrischen Motors (14) antreibbar ist, der insbesondere oberseitig von der Schraubenspindeleinheit (9) angebracht ist.

## Revendications

1. Porte-charge (1) pour le montage sur l'arrière d'un véhicule et ayant à l'avant un dispositif d'accouplement (2) pour fixer le porte-charge (1) au véhicule, une pièce de base (7) reliée au dispositif d'accouplement (2) et un châssis porteur (15) pour fixer des charges, le châssis porteur (15) étant relié à la pièce de base (7) le dispositif d'accouplement (2) et la pièce de base (7) étant reliées par un palier pivotant (6) permettant un mouvement de pivotement depuis une position non inclinée jusqu'à une position inclinée de la pièce de base (7) et même du châssis porteur (15) autour d'un axe pivotant horizontal s'étendant perpendiculairement dans une direction de roulement éloignée du véhicule si le porte-charge est monté sur le véhicule, le palier pivotant (6) comprenant au moins un mécanisme de blocage comportant respectivement un élément de blocage (35) qui est déplaçable entre une position de blocage bloquant le palier pivotant (6) dans la position non inclinée et une position de libération permettant d'incliner le châssis porteur (15), et l'élément de blocage (35) étant actionnable par un mécanisme d'actionnement disposé sur la pièce de base (7) ou le châssis porteur (15), le mécanisme d'actionnement (23) ayant un élément d'actionnement (25) déplaçable entre une position non-actionnée et une position actionnée, l'élément d'actionnement (25) et l'élément de blocage (35) étant disposés et formés de manière à ce que l'élément d'actionnement (25) puisse agir sur l'élément de blocage (35) pour débloquer le palier pivotant (6) lorsque le châssis porteur (15) est en position de transport, **caractérisé en ce que** le châssis porteur (15) est déplaçable relativement à la pièce de base (7) entre une position de transport supérieure et une position de chargement inférieure au moyen d'un dispositif de déplacement (8) agissant entre la pièce de base (7) et le châssis porteur (15).

2. Porte-charge selon la revendication 1, **caractérisée en ce que** le châssis porteur (15) s'étend dans la position non inclinée au moins substantiellement dans un plan horizontal et **en ce que** le châssis porteur (15) dans la position inclinée, est incliné relativement au plan horizontal, sous au moins 25° approximativement.

3. Porte-charge selon les revendications 1 ou 2, **caractérisé en ce que** la position de charge est si basse que le châssis porteur (15) est en contact avec un sol ou une route lorsque le porte-charge (1) est monté sur le véhicule se trouvant sur ce sol ou cette route.

4. Porte-charge selon l'une des revendications 1 à 3, **caractérisé en ce que** l'élément d'actionnement (25) est disposé sur le châssis porteur (15) et **en ce que** l'élément de blocage (38) est disposé sur la pièce de base (7), de telle sorte que l'élément d'actionnement (25) ne se trouve à l'opposé de l'élément de blocage (35) qu'en position de transport du châssis porteur (15).

5. Porte-charge selon l'une des revendications 1 à 4, **caractérisé en ce que** le mécanisme d'actionnement (23) est actionnable depuis l'extrémité arrière du porte-charge (1), se projette en particulier sur l'extrémité arrière du porte-charge (1).

6. Porte-charge selon l'une des revendications 1 à 5, **caractérisé en ce que** l'élément de blocage (35) est représenté par un levier tournoyant (35) comportant une tige de blocage (38) logé dans un évidement (40), ainsi bloquant le mécanisme de blocage et **en ce que** le levier tournoyant (35) est déplaçable par actionner l'élément d'actionnement (25), de manière à ce que la tige de blocage (38) soit déplacé hors du évidement (40), ainsi libérant le palier pivotant (6) pour incliner le châssis porteur (15) en la position inclinée, en particulier **en ce que** l'évidement (40) est formé dans une partie du dispositif d'accouplement (2) et **en ce que** le levier tournoyant (35) disposé sur la pièce de base (7) est pivotant.

7. Porte-charge selon l'une des revendications 1 à 6, **caractérisé en ce que** l'élément d'actionnement (25) est réalisé sous la forme d'un élément de poussée qui, lorsqu'il est actionné, pousse l'élément de blocage (35) de la position de blocage vers la position de libération, en particulier **en ce que** l'élément de poussée est représenté sous la forme d'une tige de poussée, déplaçable en particulier par glissement entre ses positions non-actionnées et actionnées, de préférence dans la direction de roulement.

8. Porte-charge selon l'une des revendications 1 à 7, **caractérisé en ce que** l'élément d'actionnement (25) est connecté à une pale (33) qui agit sur l'élément d'actionnement (25), particulièrement **en ce que** la pale (33) se projette au-dessus de l'extrémité arrière du porte-charge (1).

9. Porte-charge selon l'une des revendications 1 à 8, **caractérisé en ce que** le dispositif d'accouplement (2) se présente pour être monté sur la rotule (3) d'un croc de remorquage (4).

10. Porte-charge selon l'une des revendications 1 à 9, **caractérisé en ce que** le dispositif de déplacement (8) comprend un dispositif de broche filetée (9) disposé au moins substantiellement à la verticale à l'avant du châssis porteur (15).

11. Porte-charge selon la revendication 10, **caractérisé en ce que** le dispositif de broche filetée (9) comprend un tube télescopique externe (10) et un tube télescopique interne (11) déplaçables par glissement, guidés à l'intérieur du tube télescopique externe (10) et une broche filetée (12) s'étendant coaxialement à travers les deux tubes (10, 11) et reliant les deux tubes (10, 11) de manière à ce que rôtir de la broche filetée (12) entraîne un mouvement télescopique des tubes (10, 11) l'un relativement à l'autre, en particulier en une direction verticale.

12. Porte-charge selon la revendication 11, **caractérisé en ce que** le tube télescopique interne (11) est monté sur le châssis porteur (15) et **en ce que** le tube télescopique externe (10) est monté sur la pièce de base.

13. Porte-charge selon les revendications 11 ou 12, **caractérisé en ce que** la broche filetée (12) est entraînée par un moteur électrique (14), qui est installé particulièrement au sommet du dispositif de broche filetée (9).
